# EUROPEAN PATENT APPLICATION

(11) **EP 1 734 630 A2**
(43) Date of publication of application: **20.12.2006**
(21) Application number: 06253138.9
(22) Date of filing: 16.06.2006
(51) Int. Cl.: H02G 13/00

(54) **Improvements in or relating to lightning conductors**

(30) Priority: 17.06.2005 GB 0512428
(71) Applicant: Thomas & Betts International, Inc., Memphis, Tennessee 38125 (US)
(72) Inventor: Bilbie, John Leslie, Beeston, Nottingham (GB)
(74) Representative: Howick, Nicholas Keith

(57) **Abstract**

A device for securing a lightning conductor (20) to a surface has a base (10) of flexible material able to conform to the profile of a curved tile surface. A lightning conductor retaining element (21) is supported on the base (10).

## Description

The invention relates to lightning conductors, and particularly to devices, systems and methods for securing lightning conductors to buildings and roofs of buildings.

There is a particular problem with securing lightning conductors (which are typically flat strips of copper) to tiled roofs, because the roof profile is not planar, and involves significant discontinuities in the surface, and because roof tiles come in many different profiles.

Existing products currently available use a mechanical and/or spring mechanism to engage a roof tile, and this requires the tile to be lifted or dislodged to hold the mechanism in place. Due to the wide range of tiles and profiles used in construction, a wide range of mechanical clips is needed. Tile movement is undesirable, both aesthetically and functionally as far as the roof is concerned.

An alternative approach has been simply for a contractor to put a blob of cement over the lightning conductor and on the roof tile, and to hope that the lightning conductor is secured to the tile in this way. This arrangement is prone to failure.

According to the invention, there is provided a device for securing a lightning conductor to a surface, which device comprises a base of flexible material able to conform to the profile of a curved tile surface, and a lightning conductor retaining element supported on the base, which retaining element, in use, retains a lightning conductor on the device.

The retaining element may comprise a clip mounted on the base, and the clip may have a release position in which a lightning conductor may be located on or removed from the clip, and a retaining position in which the lightning conductor is retained on the clip.

Adhesive is used to secure the device to a roof; the invention further provides an assembly including a roof, a lightning conductor and a device according to the invention, the flexible base being secured to the roof by adhesive.

The invention further provides a method of securing a lightning conductor to a roof comprising the steps of applying adhesive to the base of a device according to the invention, securing the base to the roof, and retaining the lightning conductor in the retaining element of the device.

The method preferably includes the step of securing a multiplicity of devices to the roof, and retaining the lightning conductor in the retaining elements of the devices.

By way of example, an embodiment of a device according to the invention will now be described with reference to the accompanying drawings, in which:-
Figure 1 is a plan view of a device showing a lightning conductor retained in the device;
Figure 2 is a sectional view along the line 2-2 in Figure 1; and
Figure 3 is a perspective view illustrating a lightning conductor retained on a roof by two securement devices.

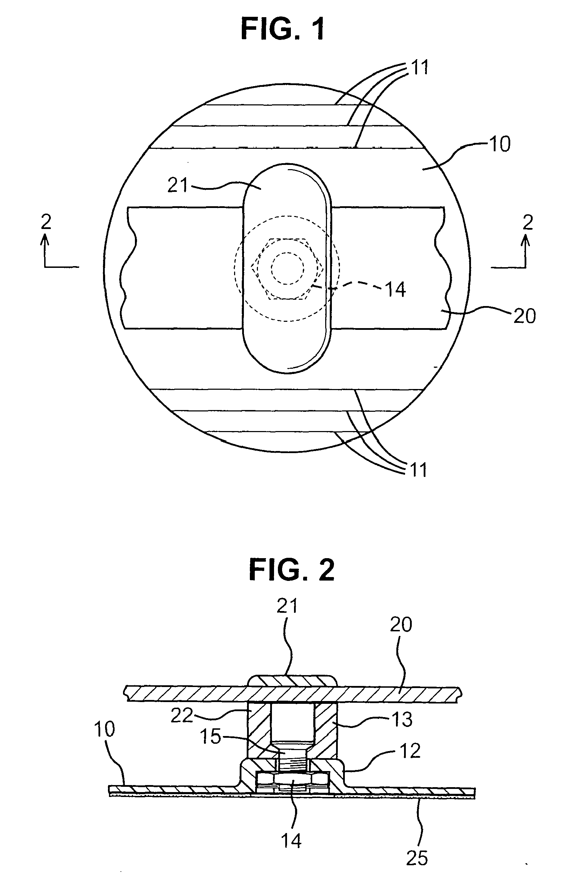

As shown in Figure 1, a device according to the invention includes a flexible base 10 of a suitable polymeric material. Trim lines 11 are provided on the upper surface on the base 10, the lower surface of the base 10 being flat when not in use.

The base has a central support boss 12 formed in it, and the support boss 12 supports a retaining element 13 thereon, in this embodiment by means of a nut 14 and bolt 15. The retaining element 13 has a retaining clip 21 engageable in a support portion 22 of the retaining element 13. The retaining element 13 can be made of any suitable material, for example metal or plastics of suitable rigidity.

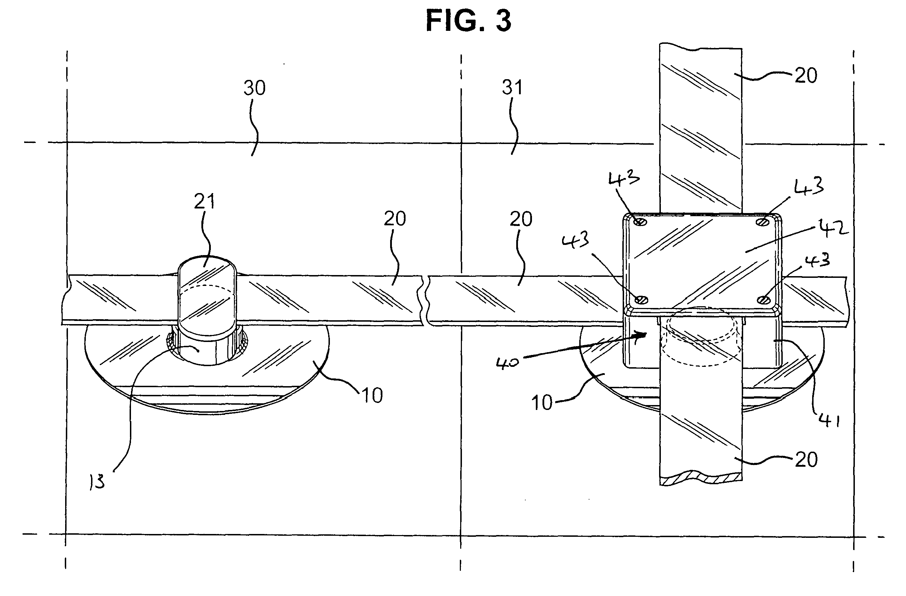

In use, proprietory adhesive is applied to the flexible base 10, the adhesive layer being shown at 25 in Figure 2. The base is then applied to a roof surface, such as a tile, two tiles 30, 31 being shown in Figure 3. Figure 3 shows two alternative retaining elements. The retaining element shown on the left in Figure 3 is of the type shown in and described with reference to Figure 2. The other retaining element 40 retains two lightning conductors arranged at right angles. The retaining element 40 has a support portion 41 in which the lightning conductors are located, with a retaining plate 42 retained by screws 43 on the support portion 41. The support portion 41 is held on the base 10 in the same way as the support portion 22 of the retaining element 13 of Figure 2.

Once the securement devices are secured to the roof by adhesive, the lightning conductor 20 is clipped into the retaining element 13 on each securement device.

It will be appreciated that many alternative clip arrangements for the retaining element could be provided, and that alternative ways of mounting the retaining element on the base could also be provided. Modifications to this embodiment may be made within the scope of the invention as defined in the appended claims.

## Claims

1. A device for securing a lightning conductor to a surface, which device comprises a base of flexible material able to conform to the profile of a curved tile surface, and a lightning conductor retaining element supported on the base, which retaining element, in use, retains a lightning conductor on the device.

2. A device as claimed in claim 1, wherein the retaining element comprises a clip mounted on the base.

3. A device as claimed in claim 2, wherein the clip has a release position in which a lightning conductor may be located on or removed from the clip, and a retaining position in which the lightning conductor is retained on the clip.

4. An assembly including a roof, a lightning conductor and a device as claimed in any one of claims 1 to 3, the flexible base being secured to the roof by adhesive.

5. A method of securing a lightning conductor to a roof comprising the steps of applying adhesive to the base of a device as claimed in any one of claims 1 to 3, securing the base to the roof and retaining the lightning conductor in the retaining element of the device.

6. A method as claimed in claim 5 including the step of securing a multiplicity of devices to the roof, and retaining the lightning conductor on the retaining elements of the devices.
